# EUROPEAN PATENT APPLICATION

(11) **EP 3 937 472 A1**
(43) Date of publication of application: **12.01.2022**
(21) Application number: 20185133.4
(22) Date of filing: 10.07.2020
(51) Int. Cl.: H04M 1/725, H04W 52/02, H04B 1/3827, H04L 12/24, H04W 4/50, H04M 1/663

(54) **METHOD AND SYSTEM FOR CONTROLLING CONNECTIVITY**

(71) Applicant: Deutsche Telekom AG, 53113 Bonn (DE)
(72) Inventor: LESSMANN, Johannes, 51647 Gummersbach (DE)
(74) Representative: Vossius & Partner Patentanwälte Rechtsanwälte mbB

(57) **Abstract**

Method for controlling a mobile terminal device in a reduced connection mode, wherein the mobile terminal device is configured to be connected to at least one telecommunication network in a connected mode and configured to send and/or receive data from the telecommunication network when being in the connected mode. The mobile terminal device is configured to be disconnected to the telecommunication network in a disconnected mode configured to not receive data from the telecommunication network when being in the disconnected mode. After the reduced connection mode has been activated, the method comprises the steps of: a) activating the disconnected mode at a first predetermined point of time, T1; b) activating the connected mode at a second predetermined point of time, T2, or after a first predetermined time period, dT1 after the first predetermined point of time, T1; c) automatically receiving and/or requesting and receiving event data from/to the telecommunication network and outputting a notification signal based on a classification of the received event data; and wherein the steps a) to c) are repeated until the reduced connection mode is deactivated.

## Description

The invention relates to the field of mobile telecommunication networks. In particular, the invention relates to a method and system for controlling the connectivity of a mobile user terminal device.

The term mobile user terminal devices, also referred to hereinafter as user device, includes all kinds of terminal devices connected to a mobile telecommunication network, e.g. but not limited thereto smart phones. Such user devices typically have a plurality of operation modes or audio profiles, which are preconfigured or can be configured by the user. In a so-called silent mode, the user is notified by an audio signal about incoming calls or messages. There are also variations of the silent mode in which the user may configure many kinds of rules for exceptions, e.g. a certain number will still ring or messages from certain domains will still cause a signal.

The silent mode and any variation thereof all are based on the prerequisite that the user device is connected to the mobile telecommunication network. In contrast in a so-called flight mode the user device is not connected to the mobile telecommunication network. In variations thereof, the user device may be configured to support more than one wireless connection method into one or more wireless networks and in the flight mode the user device may be not connected to one or more of the wireless networks. In any case in flight mode the user device is disconnected and neither calls nor messages can be received, and in consequence no audio and/or visual signals may be triggered.

Some users prefer to activate the flight mode when they do not want to be disturbed by the user device, preferably during nighttime. This is motivated by the desire to reduce exposure to the electromagnetic signals, i.e. electromagnetic radiation exposure, EMR-exposure, caused by the user device and/or to reduce overnight battery drainage. However, when in flight mode, the user device cannot be reached, in particular not in the event of exceptional circumstances.

It is therefore a problem to combine exceptional reachability, preferably based on predefined rules, and the minimization of EMR-exposure as well as reduced battery drainage. This problem can not be solved by the silent mode or the flight mode.

The above problem is solved by the subject-matter of the independent claims. The dependent claims relate to further aspects of the invention

According to an aspect of the invention there is provided a method for controlling a mobile terminal device in a reduced connection mode, wherein the mobile terminal device is configured to be connected to at least one telecommunication network in a connected mode and configured to send and/or receive data from the telecommunication network when being in the connected mode. The mobile terminal device is configured to be disconnected to the telecommunication network in a disconnected mode configured to not receive data from the telecommunication network when being in the disconnected mode.After the reduced connection mode has been activated, the method comprises the steps of:
a) activating the disconnected mode at a first predetermined point of time, T1;
b) activating the connected mode at a second predetermined point of time, T2, or after a first predetermined time period, dT1 after the first predetermined point of time, T1;
c) automatically receiving and/or requesting and receiving event data from/to the telecommunication network and outputting a notification signal based on a classification of the received event data; and
wherein the steps a) to c) are repeated until the reduced connection mode is deactivated.

In an embodiment of the invention, the method comprises the further step
d) activating the disconnected mode at a third predetermined point of time, T3, after a second predetermined time period, dT2, after the second predetermined point of time or after the event data has been received; and
wherein step d) is preferably executed after step c) and T3 is equivalent to T1 for the next repetition.

In an embodiment of the invention, the event data comprises information about at least one telecommunication event, preferably information about at least one of: a missed call, a missed text message, a missed message of a messenger application.

In an embodiment of the invention, the classification of step c) is predetermined and/or is defined by a user input.

In an embodiment of the invention, reduced connection mode is activated by a user input at a point of time, Tstart and/or deactivated by a further user input at a point of time, Tend; or the reduced connection mode is activated by a user input defining a point of time, Tstart, and/or deactivated by a further user input defining at a point of time, Tend.

In an embodiment of the invention, the predetermined points of time, T1, T2, and T3 and/or the predetermined periods of time dT1 and dT2 are predetermined and/or are respectively defined by a user input.

In an embodiment of the invention, the predetermined points of time, T1, T2, and T3 and/or the predetermined periods of time dT1 and dT2, are obtained from a schedule and wherein said schedule is predetermined and/or defined by a user input.

In an embodiment of the invention, the step c) alternatively or additionally comprises the step of connecting to a web-based service to receive event data from the web-based service.

In an embodiment of the invention, the web-based service provides a user interface to define events and/or any one of the predetermined points of time, T1, T2, and T3 and/or the predetermined periods of time dT1 and dT2.

According to an aspect of the invention there is provided a mobile terminal device configured to perform the method according to any one of the preceding embodiments.

According to an aspect of the invention there is provided a telecommunication network configured to connect with a mobile terminal device according to an embodiment of the invention and to perform the method according to any one of the preceding embodiments.

According to an aspect of the invention there is provided a telecommunication system comprising at least one telecommunication network according to an embodiment of the invention and at least one mobile terminal device according to an embodiment of the invention, and configured to perform the method according to of the preceding embodiments.

According to an aspect of the invention there is provided a web-based service connected to the telecommunication system according to claim 12 and configured to provide a user interface to define one or more of:
i) events;
ii) any one of the predetermined points of time, T1, T2,T3, Tstart, and Tend;
iii) the predetermined periods of time dT1 and dT2; and
iv) the schedule.

According to an aspect of the invention there is provided a web-based service connected to the telecommunication system according to an embodiment of the invention and configured to provide an application programming interface, API, which is configured to create new event data based on an external input via the API.

In an embodiment of the invention, in the web-based service according the external input via the API is one or more of:
i) an event detected on a webpage or a web service,
ii) an event communicated from a webpage or a web-based service,
ii) an event detected in a network of a Mobile Network Operator,
iii) and an event communicated from a Mobile Network Operator.

It is a core concept of the invention to automatically deactivate the flight mode in preconfigured intervals and check for incoming calls, messages, events and such. Said incoming calls, messages, events and such are hereinafter referred to as a trigger. Thereafter, the flight mode is activated again. In case a trigger has been received an audio, haptic, and/or visual signal is provided to the user. The audio and/or visual signal, hereafter referred to as alarm, may be provided via a any suitable means, i.e. internal speakers, vibration unit, LED-flash but also via connected external devices such as smart home elements and/or Bluetooth devices.

### Brief Description of the Drawings

The above-described objects, advantages and features of the present invention, as well as others, will be more readily understood from the following detailed description of certain preferred embodiments of the invention, when considered in conjunction with the accompanying drawings in which:
- Fig. 1: shows a general time flow chart of an embodiment of the present invention;
- Fig.2: shows a detailed timing diagram of an embodiment of the invention; and
- Fig. 3: shows a timing diagram of an embodiment of the invention.

### Detailed Description of the Drawings

In the following, embodiments of the invention will be described. It is noted that some aspects of every described embodiment may also be found in some other embodiments unless otherwise stated or obvious to the skilled person. However, for increased intelligibility, each aspect will only be described in detail when first mentioned and any repeated description of the same aspect will be omitted.

In an embodiment of the invention, a user activates a reduced connection mode in the evening before falling asleep. In a first interval, also referred to as first cycle, no event occurs, i.e. no trigger is received, when the user device connects to the network at the end of the first cycle. In a second cycle, an event occurs, i.e. a trigger is received, when the user device connects to the network at the end of the cycle. However, the event is classified as not relevant and thus no alarm started. In a third cycle, an event occurs, i.e. a trigger is received, when the user device connects to the network at the end of the cycle. This time the event is classified a relevant and thus an alarm is started, e.g. to notify the sleeping user.

It is to be understood that the above enumeration of the cycles is for illustration only and not meant to limit the embodiment. In particular, the order may be different and/or any number of cycles may be therebetween. In addition or alternatively, a trigger may be actively received, i.e. pulled form a network, or passively received, i.e. pushed by the network. In addition or alternatively, the trigger may be based on an existing notification mechanism of the network or may be based on a further notification service, preferably a web-based notification service. In addition or alternatively, the classification may be predetermined or based on a artificial intelligence and the classification may be carried by the user device or in an instance of the network, e.g. an edge system of the network.

In an embodiment of the invention, the point of time, preferably in each cycle, at which the user device is connected to the network and/or disconnected to the network can be determined by the user, preferably via an input into the user device, preferably the input determined one or more of: a start time of the reduced connection mode, a stop time of the reduced connection mode, a duration of the reduced connection mode, an input regarding the duration of a single cycle and an input about one or more intervals with different cycle duration and/or classification rules.

In an embodiment of the invention, the reduced connection mode can be manually turned on and off by the user, preferably via an input to the user device.

In an embodiment of the invention, the user may define one or more intervals. Each interval having different cycle duration and/or different classification rules. This allows to define times in which an important event is expected, i.e. a relevant trigger might be received; at those times a more frequent checking for new triggers is preferred. In an example, between midnight and 4 am and between 5 am and 7 am the cycle duration, i.e. the time between disconnection from the network and connection with the network in order to receive new triggers, may be set to 20 minutes. For the time between 4 am and 5 am every 5 minutes the user device checks for new triggers. This allows the user to react in a timely manner in case of an expected trigger without having to maintain a high checking frequency all night long.

In an embodiment of the invention, the received triggers are classified in order to determine whether or not a trigger is important and whether or not an alarm is provided. In a preferred embodiment the classification is based on classification rules. The classification rules may be static or may be dynamic. The classification rules may be based on a user input and/or on a predetermined set of classification rules. In general, the classification mechanism may be similar and/or identical to the classification in the silent mode as described above. The classification may be performed on the user device and/or in an instance within the network.

It is a general concept of the invention that many different types of events are possible which result in a corresponding trigger. It is to be understood that the invention is not limited to a specific type of event and corresponding trigger. Events and/or triggers may be one or more of the following: A call or message, including SMS, Whatsapp, Email and such, from a specific person and/or groups of persons; a notification from a specific App, e.g. ebay alert or stock market event; or a notification from a specific website and/or web-service.

In an embodiment of the invention the user device connects to the network to receive the triggers. Preferably, the user device connects to at least one web-based service to receive the triggers. Preferably, the web-based service continuously checks for events and triggers and aggregates the information. The term continuously, includes regular repeated checks. Additionally or alternatively the web-based service is configured to receive events and/or triggers form other services, preferably network services of the telecommunication network and/or other websites.

As previously mentioned for the user device, also the web-based service is configured to actively receive information for an event and/or trigger, e.g. retrieve information from a website. Additionally or alternatively the web-based service is configured to passively receive information about an event and/or trigger. Also hybrid embodiments, i.e. both the user device itself and the web-based service receive triggers, more preferably the different triggers.

In embodiments of the invention, the user device only connects to the web-based service and consequently the user device does not need to connect to a plurality of sources and the connection time may be reduced. Specifically, this allows to turn-off all background application on the user device, which may further reduce battery drainage.

In an embodiment of the invention, the web-based service supports further services. Preferably, the web-based service has an application programming interface, API, and/or a web-based user interface. In preferred embodiments the user X of the user device is able to define an event and/or trigger with the web-based service via the API and/or user interface. This defining may also be considered to register an event and/or trigger.

The skilled person is aware of many methods to implement an API and/or user interface. Such interfaces typically support user management and other sub-services. Preferred embodiments of the invention relate to a graphical user interface.

In a preferred embodiment API and/or user interface is configured to allow a user Y to deactivate, i.e. deregister an event, for user X. This is useful in the use case that user X expects an event from user Y, e.g. a call from a specific number or an Email from a specific address. In this case user X may register the respective trigger with the web-based service and also enable user Y to deregister the trigger again. This allows user Y to signal the user device that the trigger is no longer necessary, when the user device connects in the next cycle. This allows to permanently turn off the user device, preferably in case no further triggers are registered.

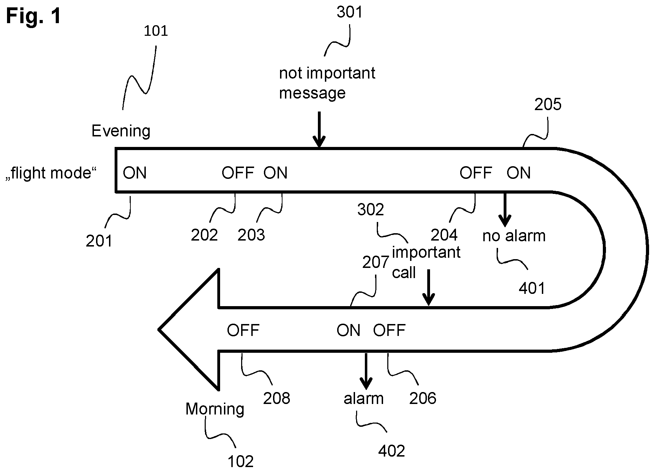

Fig. 1 shows a general time flow chart according to an embodiment of the present invention. In the evening the user activates the reduced connection mode 101, which corresponds to turning on the traditional flight mode 201. This starts the first cycle of the reduced connection mode. At the end of the first cycle the user device connects to the network again 202, which corresponds to turning off the traditional flight mode. Within the cycle no event happened, consequently no trigger is received by the user device. Subsequently the user device is disconnected again 203, which starts the second cycle of the reduced connection mode. In the second cycle a message for the user device arrives 301. At the end of the second cycle the user device connects again 204. This time the trigger about the message is received by the user device. The received trigger is classified based on classification rules as discussed above. In the present example it is determined based on the classification result that the event and consequently the trigger is not important. Consequently, no alarm is output 401. Subsequently, the user device is disconnected again 205 and the third cycle of the reduced connection mode starts. In the third cycle a call for the user is registered 302. At the end of the cycle the user device connects to the network 206 and receives the trigger corresponding to the call. Based on the classification it is determined that the call was important and consequently an alarm is outputted 402. At the end of the third cycle the user device is disconnected 207 again. Subsequently a fourth cycle starts. The fourth cycle is terminated at the end of the reduced connection mode in the morning by connecting to the network 208.

Additionally or alternatively at the end of the reduced connection mode a last time the triggers of the last cycle are received; classified; and the corresponding alarm is outputted or not outputted depending on the classification result, respectively.

It is understood that the reduced connection mode is a cyclic operation mode, i.e. the connecting and disconnecting is repeated. The terms subsequently, after and such as used in this description are relative terms indicating a certain order of events. However, it is clear that a cycle may also start with connecting to the network. In other words, the count of the cycles may be shifted along the timeline without changing the relative order of events. The count of cycles mainly effects the first and last cycle or partial cycle which may be an incomplete cycle.

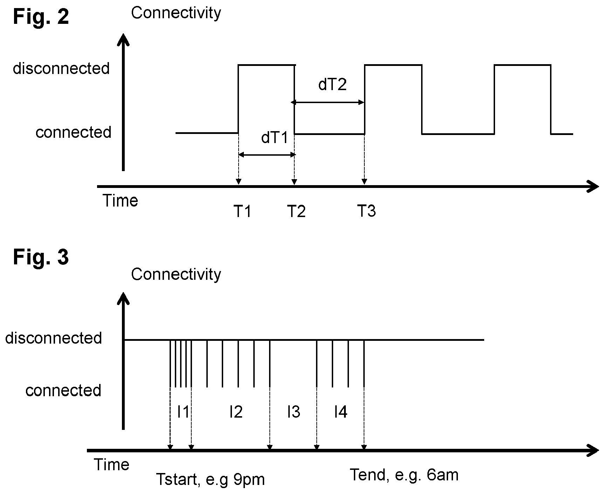

Fig. 2 shows a detailed timing diagram according to an embodiment of the invention. The diagram illustrates the timing and the relative order and temporal distances in the reduced connection mode. The user device is connected to the network. That is either at the beginning of the reduced connection mode, or at any time during the reduced connection mode. At a first point of time T1 the user device is disconnected from the network. At a second point of time T2 the user device is connected to the network again. At a third point of time T3 the user device is disconnected again. Between T2 and T3 the user device is connected and receives the triggers of the preceding disconnected period between T1 and T2. The term receives includes pull and/or push mechanisms as detailed above.

In an embodiment of the invention, the points of time T1, T2, and T3 are predetermined.

In an embodiment of the invention, the different periods are defined by their respective duration. That is the disconnected period between T1 and T2 is defined by a first duration dT1. Additionally or alternatively the connected period between T2 and T3 is defined by a second period of time dT2.

It is also understood that the third point of time of a cycle is the first point of time T1 of a subsequent cycle.

In an embodiment of the invention, at least one point of time or duration, preferably T3 or dT2 is flexible. That is the user device is disconnected at a flexible point of time after the user device has determined that all triggers have been received.

Further embodiments relate to hybrid definitions of the relative timing in which only one duration is defined and the corresponding number of points of time are defined.

Fig. 3 shows a timing diagram according to an embodiment of the invention. The reduced connection mode is started at a point of time Tstart, e.g. 9 pm and stopped at a point of time Tend, e.g. 6 am. The time between Tstart and Tend is divided into a plurality of intervals, e.g. into 4 intervals I1, 12, 13, and 14. The intervals are defined by there respective duration and/or predetermined points of time. Each interval has an individual timing of the reduced connection mode. That is, one interval has at least one of: different durations, different checking frequencies, different classification rules, different triggers. In an example during interval I1, i.e. late evening, the checking frequency may be high. Later at night during interval 12 the checking frequency is reduced. In the middle of the night during interval 13 the phone is completely disconnected and in early morning during interval 14 checking is resumed at a low frequency. This allows the user to define specific time windows at which a call or message is expected and reduce EMR exposure and battery drainage in other time windows. A plurality of time windows, i.e. intervals are possible.

The complete timing of the reduced connection mode, is referred to as a schedule. In an embodiment of the invention, the schedule is determined based on a user input. In an embodiment of the invention, the schedule is predetermined. In an embodiment of the invention, the schedule is determined based on a call history, preferably by means of machine learning. Further embodiments relate to any kind of combined definition of the schedule.

In an embodiment of the invention the schedule is defined in the web-based service, preferably via the API or the user interface. Additionally or alternatively the schedule is determined via application on the user device. The application may use the API and/or the user interface.

In an embodiment of the invention, the web-based service is configured to check certain triggers, instead of the user device of user X. Preferably such triggers which are accessible via an API. The access via the API may be restricted by a password and/or username of X, the web-based service is configured to save both of which. Examples of such triggers are an ebay alert, a price alert, stock prices and such.

Other triggers, such as calls or text messages cannot be simply checked from a web-based service. In case of calls and/or text messages, which are based on SIM card authentication, may be provided to the web-based service by the mobile network operator, because said mobile network operator has access to said information in his network infrastructure.

Additionally or alternatively said triggers are checked by the user device and other triggers are checked by the web-based service.

In embodiments of the invention second user Y can access the web-based service in order to register one or more new triggers or deregister one or more existing triggers. Users X and Y may be coworkers which are both on a business trip. While user X is on his hotel room preparing a presentation user Y is having dinner with a client. Users X and Y arranged that user Y will return by taxi or with the client, however, as a fall back user Y will call user X in order for user X to pick user Y up. That is, user X expects a call or message from user Y at some point during the night. When user X goes to bed he actives the reduced connection mode. Preferably, the reduced connection mode has been set-up via the web-based service. A trigger T is defined, that is calls or messages from user Y are classified as important. That is a call or message from user Y will cause an alarm of the user device of user X.

Preferably, user Y has also access to the web-based service. User Y may have access to the trigger T. User Y may be blocked from access to other triggers of the user device of user X. This has the advantage that user Y can cancel the trigger T, e.g. in case a solution for the transport has been found. Thus, the user device of user X does not have to check for T any longer during the night. In case no further triggers exists for the reduced connection mode of user X, the device may stop connecting to the network for the remaining time of the reduced connection mode.

In a preferred embodiment user Y may also directly access the reduced connection mode of user X via an access to the web-based service. That is, user Y may manually set a trigger for user X and thus cause an alarm the next time the user device of user X is connected to the network.

What has been described and illustrated herein are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims-and their equivalents-in which all terms are meant in their broadest reasonable sense unless otherwise indicated.

## Claims

1. Method for controlling a mobile terminal device in a reduced connection mode,
wherein the mobile terminal device is configured to be connected to at least one telecommunication network in a connected mode and configured to send and/or receive data from the telecommunication network when being in the connected mode;
wherein the mobile terminal device is configured to be disconnected to the telecommunication network in a disconnected mode configured to not receive data from the telecommunication network when being in the disconnected mode;
wherein, after the reduced connection mode has been activated, the method comprises the steps of:
a) activating the disconnected mode at a first predetermined point of time, T1;
b) activating the connected mode at a second predetermined point of time, T2, or after a first predetermined time period, dT1 after the first predetermined point of time, T1;
c) automatically receiving and/or requesting and receiving event data from/to the telecommunication network and outputting a notification signal based on a classification of the received event data;
and
wherein the steps a) to c) are repeated until the reduced connection mode is deactivated.

2. The method according to claim 1, wherein the method comprises the further step
d) activating the disconnected mode at a third predetermined point of time, T3, after a second predetermined time period, dT2, after the second predetermined point of time or after the event data has been received; and
wherein step d) is preferably executed after step c) and T3 is equivalent to T1 for the next repetition.

3. The method according to claim 1 or claim 2, wherein the event data comprises information about at least one telecommunication event, preferably information about at least one of: a missed call, a missed text message, a missed message of a messenger application.

4. The method according to any one of claims 1 to 3, wherein the classification of step c) is predetermined and/or is defined by a user input.

5. The method according to any one of claims 1 to 4, wherein
i) the reduced connection mode is activated by a user input at a point of time, Tstart and/or deactivated by a further user input at a point of time, Tend; or
ii) the reduced connection mode is activated by a user input defining a point of time, Tstart, and/or deactivated by a further user input defining at a point of time, Tend.

6. The method according to any one of claims 1 to 5, wherein the predetermined points of time, T1, T2, and T3 and/or the predetermined periods of time dT1 and dT2 are predetermined and/or are respectively defined by a user input.

7. The method according to any one of claims 1 to 6, wherein the predetermined points of time, T1, T2, and T3 and/or the predetermined periods of time dT1 and dT2, are obtained from a schedule and wherein said schedule is predetermined and/or defined by a user input.

8. The method according to any one of claims 1 to 7, wherein the step c) alternatively or additionally comprises the step of connecting to a web-based service to receive event data from the web-based service.

9. The method according to claim 8, wherein the web-based service provides a user interface to define events and/or any one of the predetermined points of time, T1, T2, and T3 and/or the predetermined periods of time dT1 and dT2.

10. A mobile terminal device configured to perform the method according to any one of claims 1 to 9.

11. A telecommunication network configured to connect with a mobile terminal device according to claim 10 and to perform the method according to any one of claims 1 to 9.

12. A telecommunication system comprising at least one telecommunication network according to claim 11 and at least one mobile terminal device according to claim 10 and configured to perform the method according to any one of claims 1 to 9.

13. A web-based service connected to the telecommunication system according to claim 12 and configured to provide a user interface to define one or more of:
i) events;
ii) any one of the predetermined points of time, T1, T2,T3, Tstart, and Tend;
iii) the predetermined periods of time dT1 and dT2; and
iv) the schedule.

14. A web-based service connected to the telecommunication system according to claim 12 and configured to provide an application programming interface, API, which is configured to create new event data based on an external input via the API.

15. The web-based service according to claim 14, wherein the external input via the API is one or more of:
i) an event detected on a webpage or a web service,
ii) an event communicated from a webpage or a web-based service,
ii) an event detected in a network of a Mobile Network Operator,
iii) and an event communicated from a Mobile Network Operator.
